Europäisches Patentamt

European Patent Office

Office européen des brevets

(19)

(11) EP 0 805 221 B1

(12) FASCICULE DE BREVET EUROPEEN

(45) Date de publication et mention
de la délivrance du brevet:
**19.06.2002 Bulletin 2002/25**

(51) Int Cl.⁷: **C22C 38/54**

(21) Numéro de dépôt: **97400824.5**

(22) Date de dépôt: **11.04.1997**

(54) **Acier reparable par soudure pour la fabrication de moules pour matières plastiques**

Stahl, wiederherstellbar durch Schweissen, für die Herstellung von Pressformen für Plastikwerkstoffen

Steel, repairable by welding, for the manufacture of moulds for the plastics industry

(84) Etats contractants désignés:
**AT BE DE ES FR GB IT PT SE**

(30) Priorité: **29.04.1996 FR 9605335**

(43) Date de publication de la demande:
**05.11.1997 Bulletin 1997/45**

(73) Titulaire: **USINOR INDUSTEEL (France)**
**92800 Puteaux (FR)**

(72) Inventeurs:
 • **Beguinot, Jean**
 **71200 Le Creusot (FR)**
 • **Primon, Gilbert**
 **71230 Saint Vallier (FR)**
 • **Chenou, Frédéric**
 **71200 Le Creusot (FR)**

(74) Mandataire: **Ventavoli, Roger**
**USINOR,**
**Direction Propriété Industrielle,**
**Immeuble "La Pacific",**
**La Défense,**
**11/13 Cours Valmy,**
**TSA 10001**
**92070 La Défense (FR)**

(56) Documents cités:
 **GB-A- 1 020 913        GB-A- 2 186 594**

 • **PATENT ABSTRACTS OF JAPAN vol. 18, no. 107
 (C-1169), 22 Février 1994 & JP 05 302117 A (AICHI
 STEEL WORKS LTD.), 16 Novembre 1993,**
 • **PATENT ABSTRACTS OF JAPAN vol. 15, no. 324
 (C-859), 19 Août 1991 & JP 03 122252 A (HITACHI
 METALS LTD.), 24 Mai 1991,**

## Description

La présente invention concerne un acier faiblement allié utilisé notamment pour la fabrication de moules pour matières plastiques ou pour caoutchouc, et qui présente une bonne aptitude à la réparation par soudure.

Les moules pour matières plastiques ou pour caoutchouc sont fabriqués par usinage de blocs de métal massifs dont l'épaisseur peut dépasser 1500 mm. L'usinage a pour but, notamment, de former une empreinte ayant la forme de l'objet à obtenir'par moulage. Le plus souvent, la surface de l'empreinte est soit polie soit grainée chimiquement afin de conférer aux objets obtenus par moulage l'aspect de surface souhaité. L'opération de moulage se faisant par injection sous pression de matière plastique chaude, le moule doit résister aux efforts engendrés par la pression de la matière plastique, sans se déformer, évacuer la chaleur de la matière plastique, tout en résistant à l'usure engendrée par le frottement de la matière plastique sur la surface de l'empreinte. L'acier utilisé pour la fabrication de ces moules doit avoir des caractéristiques permettant de répondre à ces exigences De plus, les caractéristiques de l'acier doivent rester stables pendant l'utilisation des moules, c'est à dire, être insensibles aux cycles thermiques engendrés par les opérations de moulage.

Outre les propriétés qui viennent d'être évoquées, on demande à l'acier pour moules de présenter une certaine aptitude au soudage afin de permettre de réaliser des réparations soit lorsque le moule est trop usé, soit pour retoucher la forme de l'empreinte. En général, lorsqu'on fabrique un moule pour le moulage d'un objet nouveau, on réalise un premier moule avec lequel on fabrique un premier objet qui est examiné par son concepteur, lequel concepteur demande souvent que la forme de l'objet, et donc de l'empreinte du moule, soit plus ou moins modifiée. Pour éviter d'avoir à fabriquer à nouveau un moule complet, ce qui est très coûteux, on fait un rechargement par soudure sur l'empreinte du moule, puis on fait un nouvel usinage suivi souvent d'un polissage et, éventuellement, d'un grainage. Il est donc souhaitable que les zones rechargées par soudure ainsi que les zones affectées par la chaleur de soudage (ZAT) aient des propriétés très proches de celles du métal initial.

Pour satisfaire toutes ces conditions, il faudrait pouvoir disposer, pour la fabrication de moules pour injection de matières plastiques, d'un acier qui ait, notamment et à la fois, une très grande dureté, une très bonne aptitude à l'usinage, une très bonne aptitude au polissage ou au grainage chimique, une bonne conductibilité thermique, une très grande homogénéité de toutes ces caractéristiques même pour les épaisseurs les plus importantes et enfin, une bonne aptitude à la réparation par soudure. Un tel acier idéal n'est pas connu.

Pour fabriquer les moules on utilise en général des blocs d'acier faiblement allié suffisamment trempant pour obtenir, après trempe et revenu une structure martensitique ou bainitique ayant une dureté suffisante, une limite d'élasticité élevée et une bonne ténacité.

Les aciers les plus utilisés sont l'acier P20 selon la norme AISI et les aciers W1.2311 ou W1.2738 selon la norme allemande WERKSTOFF.

L'acier P20 contient, en poids, de 0,28% à 0,4% de Carbone, de 0,2% à 0,8% de Silicium, de 0,6% à 1% de Manganèse, de 1,4% à 2% de Chrome, de 0,3% à 0,55% de Molybdène, le reste étant du fer et des impuretés liées à l'élaboration.

Les aciers W1.2311 et W1.2738 contiennent, en poids, de 0,35% à 0,45% de Carbone, de 0,2% à 0,4% de Silicium, de 1,3% à 1,6% de Manganèse, de 1,8% à 2,10% de Chrome et de 0,15% à 0,25% de Molybdène ; l'acier W1.2738 contient en outre de 0,9% à 1,2% de Nickel, le reste étant du fer et des impuretés liées à l'élaboration.

Ces aciers ont une bonne tenue à l'usure et de bonnes caractéristiques mécaniques, mais ils ont l'inconvénient d'être peu soudables ce qui rend difficile les réparations par soudure.

Afin de remédier à cet inconvénient, il a été proposé, notamment dans la demande de brevet européen EP 0 431 557, un acier pour la fabrication de moules pour moulage par injection de matières plastiques, dont la composition chimique comprend, en poids, de 0,1 % à 0,3 % de carbone, moins de 0,25 % de silicium, de 0,5 % à 3,5 % de manganèse, moins de 2 % de nickel, de 1 % à 3 % de chrome, de 0,03 % à 2 % de molybdène, de 0,01 % à 1 % de vanadium, moins de 0,002 % de bore, élément considéré comme étant une impureté nuisible, le reste étant substantiellement du fer ; la composition chimique devant, en outre satisfaire la relation :

$$BH = 326 + 847,3 \times C + 18,3 \times Si - 8,6 \times Mn - 12,5 \times Cr \leq 460$$

Compte tenu de cette formule, la teneur en carbone maximale admissible est, en fait, de 0,238 %.

Cet acier présente l'avantage d'avoir une bonne résistance à la fissuration lors du rechargement par soudage, même en l'absence de préchauffage ou de post chauffage, mais il présente l'inconvénient d'être difficile à mettre en oeuvre après réparation par soudure, en raison, notamment, de l'écart de dureté important entre la ZAT de réparation et le métal de base (de 100 à 150 HB). De plus, cet acier a une conductibilité thermique relativement faible, ce qui limite la productivité des lignes de fabrication par moulage.

En fait, les inventeurs ont constaté que la notion de soudabilité habituellement utilisée n'est que partiellement représentative de l'aptitude à la réparation par soudure d'aciers pour moules. En effet, au sens habituel de la notion de soudabilité, un acier soudable est un acier qui ne se fissure pas lors d'opérations de soudage, même en l'absence de précautions particulières. Dans le cas de la réparation par soudage des aciers pour moules, il est certes nécessaire qu'il n'y ait pas de fissures, mais ce n'est pas suffisant. Il faut, aussi, que les zones réparées par soudure, ainsi que les zones affectées par la chaleur qui leur sont adjacentes, s'usinent, se polissent et se grainent bien. Par ailleurs, souvent, il n'est pas indispensable que l'opération de réparation par soudure puisse se faire sans préchauffage ou post chauffage.

Le but de la présente invention est de proposer un acier qui présente à la fois les principales caractéristiques souhaitées pour un acier destiné a la fabrication de moules et qui, tout en ayant une conductibilité thermique meilleure que celle des aciers connus, soit facilement réparable par soudure, c'est à dire, notamment, qui garde une bonne aptitude au polissage et grainage après rechargement par soudure.

A cet effet, l'invention a pour objet un acier pour la fabrication de moules pour injection de matières plastiques dont la composition chimique contient, en poids :

$$0,17 \% \leq C \leq 0,27 \%$$

$$0 \% \leq Si \leq 0,5 \%$$

$$0 \% \leq Mn \leq 2 \%$$

$$0 \% \leq Ni \leq 2 \%$$

$$0 \% \leq Cr \leq 3 \%$$

$$0 \% \leq Mo + W/2 \leq 1,5 \%$$

$$0 \% \leq V + Nb/2 + Ta/4 \leq 0,5 \%$$

$$0,002 \% \leq B \leq 0,015 \%$$

$$0,005 \% \leq Al \leq 0,2 \%$$

- éventuellement, au moins un élément pris parmi le soufre, le sélénium et le tellure, la somme des teneurs en ces éléments étant inférieure ou égale à 0,2 %,
- éventuellement, au moins un élément pris parmi le titane et le zirconium, en des teneurs telles que la somme de la teneur en titane et de la moitié de la teneur en zirconium soit inférieure ou égale à 0,3 %,
- éventuellement, au moins un élément pris parmi le plomb et le bismuth, la somme des teneurs en ces éléments étant inférieure ou égale à 0,2 %,
- éventuellement du calcium en une teneur inférieure ou égale à 0,1 %,

le reste étant du fer et des impuretés résultant de l'élaboration ; la composition chimique satisfaisant, en outre, les relations suivantes (teneurs en % en poids) :

$$Cr + 3 \times (Mo + W/2) + 10 \times (V + Nb/2 + Ta/4) \geq 2,1$$

$$Mo + W/2 > 0,7 \% \text{ si } Cr \leq 1,5 \%$$

$$Tr = 3,8 \times C + 1,1 \times Mn + 0,7 \times Ni + 0,6 \times Cr + 1,6 \times (Mo + W/2) + 0,6 \geq 3$$

$$R = 3,8 \times C + 10 \times Si + 3,3 \times Mn + 2,4 \times Ni + 1,4 \times (Cr + Mo + W/2) \leq 11$$

De préférence, la teneur en carbone est comprise entre 0,2 % et 0,24 % ; de même, il est préférable que la teneur en chrome soit comprise entre 1,5 % et 2,5 % ; il est également préférable que la teneur en molybdène soit comprise entre 0,5 et 1,2%.

La composition chimique peut être choisie de telle sorte que :

$$BH = 326 + 847,3 \times C + 18,3 \times Si - 8,6 \times Mn - 12,5 \times Cr > 460$$

ce qui a l'avantage de permettre d'augmenter la conductibilité thermique de l'acier tout en améliorant la tenue à l'usure des empreintes sans nuire à l'aptitude à la réparation par soudage.

De préférence, et pour obtenir une très bonne conductibilité thermique, la teneur en silicium doit être inférieure ou égale à 0,2 % et mieux encore, inférieure ou égale à 0,1 %.

Lorsque l'acier contient du titane ou du zirconium, et cela est souhaitable, il est préférable que les teneurs (en % en poids) en titane, zirconium et azote, (élément toujours présent au moins à titre d'impureté), soient telles que :

$$0,00003 \leq (N) \times (Ti + Zr/2) \leq 0,0016$$

Dans ces conditions, si le titane ou le zirconium ont été introduits de façon progressive par dissolution d'une phase oxydée, le nombre de précipités de nitrure de titane ou de zirconium, de taille supérieure à 0,1 μm, comptés sur une aire de 1 mm$^2$ d'une coupe micrographique de l'acier à l'état solide, est inférieur à 4 fois la somme de la teneur totale en titane précipité sous forme de nitrure et de la moitié de la teneur totale en zirconium précipité sous forme de nitrure, exprimée en millièmes de % en poids. Les très fins précipités de nitrure ont l'avantage d'affiner la microstructure de la ZAT et d'améliorer sa ténacité, ce qui favorise une bonne aptitude à la réparation par soudure. Le nombre réduit de gros précipités de nitrures est, en outre, favorable à l'usinabilité et à la polissabilité.

L'acier selon l'invention peut être utilisé de façon avantageuse pour la fabrication de moules pour matières plastiques en acier moulé. Ces moules sont, alors, fabriqués par fonderie.

L'invention va maintenant être décrite de façon plus précise et illustrée par les exemples qui suivent.

Pour satisfaire l'ensemble des caractéristiques requises pour la fabrication de moules pour injection de matières plastiques, l'acier doit, notamment, permettre d'obtenir une structure martensitique ou bainitique sur des blocs dont l'épaisseur peut atteindre 1500 mm et dont la dureté doit être supérieure à 250 HB après un revenu à une température supérieure à 500°C. Pour cela, l'acier doit avoir une trempabilité suffisante et donc contenir suffisamment d'éléments d'alliage. Mais ces éléments d'alliage détériorent la conductibilité thermique. Aussi, leurs teneurs doivent être ajustées pour obtenir une trempabilité suffisante tout en maximisant la conductivité thermique (ou en minimisant la résistivité thermique). Par ailleurs, la composition chimique de l'acier a une incidence marquée sur l'aptitude à la réparation par soudure, et la composition doit être choisie en tenant compte de cette contrainte.

L'aptitude à la réparation par soudure peut s'évaluer, notamment, par l'écart de dureté entre la ZAT (ZAT : zone affectée par la température au voisinage des cordons de soudure) et le métal de base. Plus cette différence est faible, plus il est facile de réaliser un usinage de précision et un bon polissage. Alors que, pour les aciers selon l'art antérieur, l'écart de dureté entre la ZAT et le métal de base est supérieur à 100 HB, les inventeurs ont constaté qu'il était possible d'ajuster la composition chimique de l'acier de telle sorte que cet écart de dureté reste inférieur à 50 HB tout en conservant une trempabilité suffisante. Par ailleurs, pour que le grainage puisse se faire dans de bonnes conditions, la microstructure de la ZAT doit être la plus fine possible. Enfin, la soudure doit pouvoir être faite sans qu'il apparaisse de fissures. Ces considérations conduisent à rechercher une composition. chimique telle que, d'une part, la ZAT ait une structure bainitique et d'autre part, que cette structure bainitique ait un écart de dureté le plus faible possible avec le métal de base.

Pour satisfaire simultanément toutes ces conditions, il faut, notamment, limiter les teneurs en éléments non carburigènes (manganèse, nickel et silicium, par exemple), ajouter du bore trempant, et augmenter les teneurs en éléments carburigènes tels que le vanadium, le niobium et le tantale, et, dans une moindre mesure, le molybdène et le tungstène.

Plus précisément, la composition chimique de l'acier doit contenir, en poids :

- moins de 0,27 % de carbone, mais plus de 0,17 % pour obtenir une résistance à l'usure de l'empreinte suffisante ; de préférence, la teneur en carbone doit être comprise entre 0,2% et 0,24 % ;
- entre 0,002 % et 0,015 % de bore accompagné de 0,005 % à 0,2 % d'aluminium et, éventuellement, d'au moins un élément pris parmi le titane et le zirconium, la somme de la teneur en titane et la moitié de la teneur en zirconium étant inférieure à 0,3 % ; le bore augmente la trempabilité sans augmenter l'écart de dureté entre la ZAT et le métal de base, au delà de 0,015 % il n'a plus d'effet significatif sur la trempabilité mais, par contre, induit une certaine fragilité ; l'aluminium, le titane et le zirconium sont destinés à désoxyder l'acier et à fixer l'azote, élément toujours présent, au moins à titre d'impureté, pour qu'il ne réagisse pas avec le bore;
- du molybdène, totalement ou partiellement substitué par du tungstène, en des teneurs telles que 0 % ≤ Mo + W/2 ≤ 1,5 %, et de préférence 0,5% ≤ Mo + W/2 ≤ 1,2 %, accompagné de 0 % à 3 %, et de préférence de 1,5 % à 2,5 % de chrome ; le molybdène et le tungstène ont un effet très favorable sur la trempabilité, augmenté par un effet de synergie avec le bore, tout en ayant un effet faible sur la résistivité thermique ; de plus, ces éléments ralentissent l'adoucissement au revenu, ce qui est favorable à un faible écart de dureté entre la ZAT et le métal de base et à l'obtention d'une dureté suffisante après revenu au dessus de 500°C ; par contre le molybdène et le tungstène, en teneurs trop importantes, ségrègent fortement, ce qui est défavorable à l'usinabilité et à la polissabilité ; c'est pour cela que la teneur est limitée à 1,5 % et de préférence à 1,2 % ; le chrome est destiné à compléter l'effet du molybdène sur la trempabilité et sur l'adoucissement au revenu.

A l'intérieur de ce domaine partiel de composition, et comme le chrome, le molybdène et le tungstène ont des effets partiellement complémentaires, lorsque la teneur en chrome est inférieure à 1,5 %, la somme de la teneur en molybdène et de la moitié de la teneur en tungstène doit être supérieure à 0,7 %. Ceci aide à maintenir une résistance à l'adoucissement au revenu suffisante et à augmenter la conductibilité thermique sans diminuer la trempabilité.

Afin d'apporter un durcissement supplémentaire au revenu sans détériorer les autres caractéristiques l'acier peut, éventuellement, contenir au moins un élément pris parmi le vanadium, le niobium et le tantale en des teneurs telles que la somme de la teneur en vanadium, de la moitié de la teneur en niobium et de la teneur en tantale divisée par 4, soit comprise entre 0 % et 0,5 %, et, de préférence, entre 0 % et 0,15 %. Ces additions contribuent, également, à réduire l'écart de dureté entre ZAT et métal de base.

Pour qu'il soit possible d'obtenir une dureté supérieure à 250 HB, après trempe et revenu à une température supérieure à 500 C, ce qui est nécessaire pour permettre d'effectuer un détensionnement suffisant, ou pour permettre de réaliser un traitement de surface sur l'empreinte, la composition chimique de l'acier doit satisfaire la condition suivante :

$$Cr + 3 \times (Mo + W/2) + 10 \times (V + Nb/2 + Ta/4) \geq 2,1$$

et, de préférence, afin de permettre d'augmenter la température de revenu et renforcer la tenue à l'usure :

$$Cr + 3 \times (Mo + W/2) + 10 \times (V + Nb/2 + Ta/4) \geq 3,6$$

Enfin, l'aptitude à la réparation par soudure peut être sensiblement améliorée en imposant la présence de titane ou de zirconium introduits progressivement dans l'acier liquide par dissolution d'une phase oxydée de titane ou de zirconium. Lorsqu'il en est ainsi, le titane ou le zirconium forment de très fins précipités de nitrures qui affinent la microstructure ce qui a l'avantage d'améliorer la grainabilité et d'augmenter la ténacité de la ZAT et, également, du métal de base. L'augmentation de la ténacité a pour avantage de réduire les risques de fissuration engendrés par le soudage.

Pour introduire progressivement le titane ou le zirconium, on peut, par exemple, ajouter le titane ou le zirconium dans l'acier liquide non désoxydé puis ajouter un désoxydant fort, tel que l'aluminium, en une quantité suffisante pour réduire les oxydes de titane ou de zirconium qui se sont formés. Les teneurs en titane, zirconium et azote , exprimées en % en poids, doivent être telles que :

$$0,00003 \leq (Ti + Zr/2) \times (N) \leq 0,0016$$

La teneur en azote, qui dépend des conditions d'élaboration de l'acier, se situe entre quelques ppm et quelques centaines de ppm.

En procédant ainsi, on limite la formation de gros nitrures de titane ou de zirconium qui précipitent dans l'acier liquide. L'acier obtenu est alors caractérisé par un nombre de précipités de nitrure de titane ou de zirconium de taille supérieure à 0,1 µm, comptés sur une aire de 1 mm$^2$ d'une coupe micrographique de l'acier à l'état solide, inférieur à 4 fois la somme de la teneur totale en titane précipité sous forme de nitrures et de la moitié de la teneur totale en zirconium précipité sous forme de nitrures, exprimées en millièmes de % en poids. L'acier ainsi obtenu est donc caractérisé non seulement par la présence de très fins nitrures, mais également par une faible quantité de gros nitrures ce qui est favorable à l'usinabilité et à l'aptitude au polissage.

Outre les éléments indiqués précédemment, la composition chimique comporte également les éléments suivants :

- du silicium destiné à désoxyder l'acier, élément qui a un effet très défavorable notamment sur la conductibilité thermique de l'acier, et dont la teneur doit être la plus faible possible, en tous cas inférieure à 0,5 % et, de préférence, inférieure à 0,2 %, et mieux encore, inférieure à 0,1 % ;
- du manganèse qui augmente la trempabilité et fixe le soufre, mais qui a un effet défavorable sur la conductibilité thermique ; sa teneur est ajustée entre 0 % et 2 %, et de préférence, doit rester supérieure à 0,2 %, notamment lorsque l'acier est resulfuré pour améliorer son usinabilité et ne pas dépasser 1,8 % pour limiter les ségrégations localisées nuisibles à l'usinabilité;
- éventuellement, du nickel entre 0 % et 2 %, pour augmenter la trempabilité ; mais, cet élément est à la fois coûteux et peu favorable à une bonne conductibilité thermique, cependant, il est souvent présent à titre de résiduels dans les aciers fabriqués à partir de ferrailles ; de préférence, sa teneur est limitée à 0,5 % ;
- du soufre, toujours présent en faible teneur à titre d'impuretés, mais pouvant être ajouté pour améliorer l'usinabilité, accompagné éventuellement de sélénium ou de tellure ; la somme des teneurs en soufre, sélénium et tellure devant rester inférieure à 0,2 %, notamment pour ne pas détériorer la polissabilité ;
- éventuellement, au moins un élément pris parmi le plomb et le bismuth, en des teneurs telles que la somme de ces teneurs soit inférieure ou égale à 0,2 %, et éventuellement du calcium en une teneur inférieure ou égale à 0,1 % ; toutes ces additions sont destinées à améliorer l'usinabilité ;

Le reste de la composition est du fer et des impuretés résultant de l'élaboration. Parmi les impuretés, il y a notamment le cuivre, dont la teneur peut atteindre 1%, et qui, en présence de nickel, peut avoir un effet durcissant favorable.

Outre les limites de composition qui viennent d'être décrites, pour satisfaire les objectifs poursuivis par l'invention, la composition chimique de l'acier doit satisfaire deux relations relatives, pour l'une, à la trempabilité, pour l'autre, à la résistivité thermique (inverse de la conductibilité).

Pour présenter une trempabilité suffisante, la composition chimique de l'acier doit satisfaire la relation suivante :

$$Tr = 3,8 \times C + 1,1 \times Mn + 0,7 \times Ni + 0,6 \times Cr + 1,6 \times (Mo + W/2) + 0,6 \geq kTr$$

avec kTr = 3, et de préférence, kTr = 4.

Pour présenter une bonne conductibilité thermique, la composition chimique de l'acier doit satisfaire la relation suivante :

$$R = 3,8 \times C + 10 \times Si + 3,3 \times Mn + 2,4 \times Ni + 1,4 \times (Cr + Mo + W/2) \leq kR$$

avec kR = 11, et de préférence, kR = 9 ; (**R** est un indice variant dans le même sens que la résistivité thermique, et donc en sens inverse de la conductibilité thermique).

L'examen des deux formules précédantes montre que, en fait, l'indice de trempabilité **Tr** et l'indice de résistivité thermique **R** varient globalement dans le même sens, mais qu'en choisissant convenablement la composition chimique, on pouvait, à trempabilité égale, maximiser la conductibilité thermique. Cependant, il faut tenir compte des autres contraintes, si bien que les inventeurs ont constaté que la composition chimique pouvait être ajustée de telle façon que :

$$R \leq 1,5 + 1,83 \, Tr$$

Et, cela est très préférable.

Pour que l'acier ainsi défini ait une bonne aptitude à la réparation par soudure, Il n'est pas utile que sa composition chimique satisfasse à la relation :

$$BH = 326 + 847,3 \times C + 18,3 \times Si - 8,6 \times Mn - 12,5 \times Cr \leq 460$$

Cela est même peu souhaitable car cette condition impose à la fois une faible teneur en carbone peu favorable à une bonne tenue à l'usure de l'empreinte, et de fortes teneurs en chrome, et surtout en manganèse, défavorables à la conductivité thermique et à la similitude de dureté entre la ZAT et le métal de base. Aussi, il est préférable que la composition de l'acier soit telle que :

$$BH = 326 + 847,3 \times C + 18,3 \times Si - 8,6 \times Mn - 12,5 \times Cr > 460$$

Avant d'être utilisé pour la fabrication de moules, les blocs d'acier, obtenus par laminage ou par forgeage, sont soumis à un traitement thermique de trempe à l'air ou à l'eau, selon l'épaisseur, puis soumis à un revenu à une température supérieure à 500 °C, et de préférence supérieure à 550 °C, mais, inférieure au point $Ac_1$. Ce traitement est destiné à conférer à l'acier une structure martensitique ou bainitique (la structure peut être mixte martensito-bainitique), sensiblement exempte de ferrite (il est souhaitable qu'il n'y ait pas du tout de ferrite, cependant, il peut toujours rester un petit reliquat de ce constituant), et revenue à une température suffisante pour assurer un détensionnement et permettre, le cas échéant, d'effectuer un traitement de surface à une température relativement élevée. La température de revenu est ajustée, notamment, pour que la dureté soit, en tous point, comprise entre 250 HB et 370 HB, et, de préférence, entre 270 et 350 HB.

L'acier selon l'invention présente un intérêt particulier pour la fabrication de moules par fonderie, technique qui permet d'obtenir un moule en acier moulé (et non pas en acier corroyé comme cela a été décrit ci-dessus). Selon ce procédé, au lieu d'usiner l'empreinte du moule dans un bloc massif parallélépipèdique dans lequel on perce des canaux de refroidissement par circulation d'eau, on fabrique par fonderie une ébauche de moule comportant une ébauche de l'empreinte du moule et des parties externes ayant une forme appropriée pour assurer une résistance mécanique suffisante tout en conduisant à des parois beaucoup moins épaisses que celles qui sont obtenues par la technique d'usinage de l'empreinte dans un bloc massif. Le moule, lui même, est obtenu par un usinage de finition de l'ébauche et par un traitement thermique. Cet usinage a l'avantage d'être beaucoup moins important que celui qui est nécessaire lorsqu'on part d'un bloc massif, par contre, l'acier moulé comporte des porosités qui doivent être réparées par soudure. La très bonne soudabilité de l'acier selon l'invention est, alors, un avantage très important. Par ailleurs, la bonne conductibilité thermique de l'acier selon l'invention est un avantage supplémentaire, puisqu'elle permet de réduire, voire de supprimer, le refroidissement par circulation d'eau dans des canaux percés dans les parois du moule, en profitant de l'épaisseur réduite des parois du moule. On peut, en effet, réaliser des moules dont le refroidissement pendant son utilisation, est assuré par une circulation de gaz autour de ses parties externes. Le traitement thermique est identique au traitement thermique effectué sur les moules en acier corroyé, cependant, il peut être précédé d'une ou plusieurs austénitisations destinées à affiner le grain.

A titre d'exemple, on a élaboré les aciers A, B, C, D et E conformes à l'invention, qu'on peut comparer aux aciers F, G, H, I, J et K conformes à l'art antérieur. Les compositions chimiques (en % en poids) de ces aciers sont indiquées au tableau 1. Avec ces aciers, on a fabriqué par laminage ou par forgeage des blocs trempés revenus ayant une structure bainitique ou martensitique, dont les épaisseurs, les conditions de traitement thermique et les caractéristiques obtenues sont reportés au tableau 2, avec, à titre de comparaison, les caractéristiques qu'on obtient avec les aciers F, G, H, I, J et K. Dans ce tableau, les épaisseurs sont exprimées en mm, les indices de trempabilité **Tr** sont des coefficients sans dimension, les indices de résistivité thermique **R** sont des coefficients sans dimension, les conductivités thermiques sont exprimées en W/m/K, les duretés ainsi que les écarts de dureté entre la ZAT et le métal de base ΔH sont exprimés en Brinell, BH est un coefficient sans dimension.

Tableau 1

|   | C | Si | Mn | Ni | Cr | Mo | W | V | B | Ti |
|---|---|----|----|----|----|----|---|---|---|----|
| A | 0,215 | 0,045 | 0,420 | 0,210 | 2,320 | 0,790 | - | 0,047 | 0,003 | 23 |
| B | 0,215 | 0,045 | 1,030 | 0,220 | 2,290 | 0,815 | - | 0,002 | 0,003 | 52* |
| C | 0,225 | 0,057 | 0,460 | 0,250 | 2,450 | 0,880 | 0,200 | 0,003 | 0,003 | 27 |
| D | 0,210 | 0,051 | 0,390 | 0,195 | 1,910 | 0,540 | - | 0,045 | 0,003 | 23 |
| E | 0,230 | 0,120 | 0,480 | 0,220 | 2,050 | 0,520 | 0,610 | - | 0,003 | 24 |

* Zr et non Ti

Tableau 1  (suite)

|   | C | Si | Mn | Ni | Cr | Mo | W | V | B | Ti |
|---|---|----|----|----|----|----|---|---|---|-----|
| F | 0,395 | 0,300 | 1,490 | 0,210 | 1,920 | 0,270 | - | - | - | - |
| G | 0,410 | 0,310 | 1,410 | 0,980 | 1,950 | 0,280 | - | - | - | - |
| H | 0,200 | 0,050 | 1,820 | 0,180 | 2,280 | 0,320 | - | 0,020 | 0,001 | - |
| I | 0,270 | 0,210 | 0,875 | 0,850 | 1,400 | 0,400 | - | 0,016 | 0,003 | 25 |
| J | 0,200 | 0,055 | 1,520 | 0,980 | 2,010 | 0,710 | - | 0,018 | - | - |
| K | 0,265 | 0,325 | 0,850 | 0,835 | 1,420 | 0,410 | - | 0,035 | 0,003 | 23 |

Les aciers A, B, C, D et E contiennent en outre environ 0,020 % d'aluminium et le titane a été introduit de façon progressive.

Tableau 2

|   | épais | trempe | revenu | Tr | R | conduc | dureté | ∆H | BH |
|---|-------|--------|--------|----|----|--------|--------|----|----|
| A | 140 | air | 590°C | 4,6 | 7,5 | 49 | 329 | 18 | 476 |
| A | 400 | eau | 590°C | 4,6 | 7,5 | 49 | 331 | 16 | 476 |
| B | 1100 | eau | 600°C | 5,4 | 9,5 | 45 | 331 | 40 | 471 |
| C | 800 | eau | 590°C | 5,1 | 8,3 | 47 | 313 | 48 | 483 |
| D | 210 | eau | 575°C | 3,9 | 6,5 | 51 | 313 | 15 | 478 |
| E | 150 | air | 590°C | 4,7 | 8,2 | 46 | 313 | 31 | 493 |
| F | 150 | air | 600°C | 4,8 | 12,9 | 38 | 329 | 110 | 629 |
| G | 700 | eau | 600°C | 5,3 | 14,7 | 36 | 331 | 123 | 642 |
| H | 400 | eau | 590°C | 4,6 | 11,3 | 41 | 313 | 80 | 452 |
| I | 140 | air | 590°C | 4,6 | 10,5 | 42 | 299 | 50 | 533 |
| J | 800 | eau | 510°C | 5,3 | 12,5 | 39 | 331 | 76 | 458 |
| K | 140 | air | 600°C | 4,6 | 11,6 | 40 | 295 | 51 | 531 |

Ces résultats montrent que tous les aciers conformes à l'invention, et donnés à titre d'exemple, ont à la fois une conductibilité thermique supérieure ou égale à 45 W/m/K et un écart de dureté entre ZAT et métal de base ∆H inférieur ou égale à 48 Brinell, alors que les aciers selon l'art antérieur ont à la fois une conductibilité thermique inférieure ou égale à 43 W/m/K et un écart de dureté entre ZAT et métal de base ∆H supérieure ou égale à 50 Brinell. Notamment du fait du faible écart de dureté entre la ZAT et le métal de base, les aciers A à E ont une aptitude à la réparation par soudure sensiblement meilleure que les aciers F à K.

Une comparaison à trempabilité égale, et donc à épaisseur maximale possible, montre de façon encore plus nette les avantages des aciers selon l'invention, puisque, pour Tr = 4,6, les aciers A et E (selon l'invention) ont une conductibilité thermique supérieure ou égale à 46 W/m/K et un ∆H inférieur ou égal à 31 Brinell, alors que les aciers I, H et K (selon l'art antérieur) ont une conductibilité thermique inférieure ou égale à 42 W/m/K et un ∆H supérieur ou égal à 50 Brinell ; pour Tr > 5, les aciers B et C (selon l'invention) ont une conductibilité thermique supérieure ou égale à 45 W/m/K et un ∆H inférieur ou égal à 48 Brinell, alors que les aciers J et G (selon l'art antérieur) ont une conductibilité thermique inférieure ou égale à 39 W/m/K et un ∆H supérieur ou égal à 76 Brinell. Dans les deux cas, le gain de conductibilité thermique est supérieur à 9% et la réduction de ∆H supérieure à 37%.

Il faut noter que la réparation par soudure doit, de préférence, se faire avec un métal d'apport de même composition que le métal de base. Aussi, l'acier selon l'invention peut être produit non seulement sous forme de bloc, mais, également sous forme de fil pour soudage ou pour la fabrication d'électrodes de soudage.

Cet acier est plus particulièrement destiné au moulage des pièces en matière plastique ou en caoutchouc, et exclusivement à des matières dont la température ne dépasse pas 500°C.

**Revendications**

1.  Acier pour la fabrication de moules, et notamment de moules pour moulage par injection de matières plastiques, **caractérisé en ce que** sa composition chimique comporte, en poids :

$$0,17 \% \leq C \leq 0,27 \%$$

$$0 \% \leq Si \leq 0,5 \%$$

$$0 \% \leq Mn \leq 2 \%$$

$$0\% \leq Ni \leq 2 \%$$

$$0 \% \leq Cr \leq 3 \%$$

$$0 \% \leq Mo + W/2 \leq 1,5 \%$$

$$0 \% \leq V + Nb/2 + Ta/4 \leq 0,5 \%$$

$$0,002 \% \leq B \leq 0,015 \%$$

$$0,005 \% \leq Al \leq 0,2 \%$$

-   éventuellement, au moins un élément pris parmi le soufre, le sélénium et le tellure, la somme des teneurs en ces éléments étant inférieure ou égale à 0,2 %,
-   éventuellement, au moins un élément pris parmi le titane et le zirconium, en des teneurs telles que la somme de la teneur en titane et de la moitié de la teneur en zirconium soit inférieure ou égale à 0,3 %,
-   éventuellement, au moins un élément pris parmi le plomb et le bismuth, la somme des teneurs en ces éléments étant inférieure ou égale à 0,2 %,
-   éventuellement du calcium en une teneur inférieure ou égale à 0,1 %,
-   éventuellement du cuivre en une teneur inférieure ou égale à 1,0 %,

le reste étant du fer et des impuretés résultant de l'élaboration parmis lesquelles de l'azote, la composition chimique satisfaisant, en outre, les relations suivantes :

$$Cr + 3 \times (Mo + W/2) + 10 \times (V + Nb/2 + Ta/4) \geq 2,1$$

$$Mo + W/2 > 0,7 \% \text{ si } Cr \leq 1,5 \%$$

$$Tr = 3,8 \times C + 1,1 \times Mn + 0,7 \times Ni + 0,6 \times Cr + 1,6 \times (Mo+W/2) + 0,6 \geq 3$$

$$R = 3,8 \times C + 10 \times Si + 3,3 \times Mn + 2,4 \times Ni + 1,4 \times (Cr + Mo +W/2) \leq 11$$

Tr et R représentent la trempabilité et la résistivité thermique, respectivement.

**2.** Acier selon la revendication 1 **caractérisé en ce que** :

$$0,2 \% \leq C \leq 0,24 \%$$

**3.** Acier selon la revendication 1 ou la revendication 2 **caractérisé en ce que** :

$$1,5 \% \leq Cr \leq 2,5 \%$$

**4.** Acier selon la revendication 3 **caractérisé en ce que** :

$$0,5 \% \leq Mo + W/2 \leq 1,2 \%$$

**5.** Acier selon l'une quelconque des revendications 1 à 4 **caractérisé en ce que** sa composition chimique satisfait la relation :

$$BH = 326 + 847,3 \times C + 18,3 \times Si - 8,6 \times Mn - 12,5 \times Cr > 460$$

**6.** Acier selon l'une quelconque des revendications 1 à 5 **caractérisé en ce que** sa composition chimique satisfait la relation :

$$Cr + 3 \times (Mo + W/2) + 10 \times (V + Nb/2 + Ta/4) \geq 3,6$$

**7.** Acier selon l'une quelconque des revendications 1 à 6 **caractérisé en ce que** :

$$Si \leq 0,2 \%$$

**8.** Acier selon l'une quelconque des revendications 1 à 7 **caractérisé en ce que** :

$$Si \leq 0,1 \%$$

**9.** Acier selon l'une quelconque des revendications précédentes **caractérisé en ce que** ses teneurs en titane, zirconium et azote présent à titre d'impureté sont telles que :

$$0,00003 \leq (N) \times (Ti + Zr/2) \leq 0,0016$$

et **en ce que**, à l'état solide, le nombre de précipités de nitrure de titane ou de zirconium, de taille supérieure à 0,1 μm, comptés sur une aire de 1 mm$^2$ d'une coupe micrographique de l'acier à l'état solide, est inférieur à 4 fois la somme de la teneur totale en titane précipité sous forme de nitrure et de la moitié de la teneur totale en zirconium précipité sous forme de nitrure, exprimée en millièmes de % en poids.

**10.** Acier selon la revendication 1, **caractérisé en ce que** sa composition chimique comporte, en poids :

$$0,2 \% \leq C \leq 0,24 \%$$

$$0 \% \leq Si \leq 0,1 \%$$

$$0 \% \leq Mn \leq 2 \%$$

$$0 \% \leq Ni \leq 0,5 \%$$

$$1,5 \% \leq Cr \leq 2,5 \%$$

$$0,5 \% \leq Mo + W/2 \leq 1,2 \%$$

$$0 \% \leq V + Nb/2 + Ta/4 \leq 0,15 \%$$

$$0,002 \% \leq B \leq 0,015 \%$$

$$0,005 \% \leq Al \leq 0,2 \%$$

- éventuellement, au moins un élément pris parmi le titane et le zirconium, en des teneurs telles que la somme de la teneur en titane et de la moitié de la teneur en zirconium soit inférieure ou égale à 0,3 %,
- éventuellement, au moins un élément pris parmi le soufre, le sélénium et le tellure, la somme des teneurs en ces éléments étant inférieure ou égale à 0,2 %,
- éventuellement, au moins un élément pris parmi le plomb et le bismuth, la somme des teneurs en ces éléments étant inférieure ou égale à 0,2 %,
- éventuellement du calcium en une teneur inférieure ou égale à 0,1 %,

le reste étant du fer et des impuretés résultant de l'élaboration, la composition chimique satisfaisant, en outre, les relations suivantes :

$$Cr + 3 \times (Mo + W/2) + 10 \times (V + Nb/2 + Ta/4) \geq 3,6$$

$$Tr \geq 3$$

$$R \leq 1,5 + 1,83 \, Tr$$

11. Acier selon la revendication 10 **caractérisé en ce que** ses teneurs en titane, zirconium et azote sont telles que :

$$0,00003 \leq (N) \times (Ti + Zr/2) \leq 0,0016$$

et **en ce que**, à l'état solide, le nombre de précipités de nitrure de titane ou de zirconium, de taille supérieure à 0,1 μm, comptés sur une aire de 1 mm$^2$ d'une coupe micrographique de l'acier à l'état solide, est inférieur à 4 fois la somme de la teneur totale en titane précipité sous forme de nitrure et de la moitié de la teneur totale en zirconium précipité sous forme de nitrure, exprimée en millièmes de % en poids.

12. Utilisation pour la fabrication d'un moule pour moulage par injection de matières plastiques, d'un acier selon l'une quelconque des revendications 1 à 11.

13. Utilisation d'un acier selon l'une quelconque des revendications 1 à 11 pour la fabrication par fonderie d'un moule pour matières plastiques.

14. Fil pour soudage ou pour la fabrication d'électrodes de soudage **caractérisé en ce qu'**il est constitué d'un acier selon l'une quelconque des revendications 1 à 8 et 10.

# EP 0 805 221 B1

**Patentansprüche**

1. Stahl zur Herstellung von Gussformen, und insbesondere von Gussformen für den Spritzguss von Kunststoffen, **gekennzeichnet durch** die folgende chemische Zusammensetzung, in Gewichtsprozent:

$$0,17 \% \leq C \leq 0,27\%$$

$$0\% \leq Si \leq 0,5\%$$

$$0\% \leq Mn \leq 2\%$$

$$0\% \leq Ni \leq 2\%$$

$$0\% \leq Cr \leq 3\%$$

$$0\% \leq Mo + W/2 \leq 1,5\%$$

$$0\% \leq V + Nb/2 + Ta/4 \leq 0,5\%$$

$$0,002\% \leq B \leq 0,015\%$$

$$0,005\% \leq Al \leq 0,2\%$$

- gegebenenfalls wenigstens ein Element, das ausgewählt ist aus Schwefel, Selen und Tellur, wobei die Summe aus den Gehalten an diesen Elementen kleiner oder gleich 0,2% ist,
- gegebenenfalls wenigstens ein Element, das ausgewählt ist aus Titan und Zirkon, mit derartigen Gehalten, dass die Summe aus den Gehalten an Titan und aus der Hälfte des Gehaltes an Zirkon kleiner oder gleich 0,3% ist,
- gegebenenfalls wenigstens ein Element, das ausgewählt ist aus Blei und Wismut, wobei die Summe aus den Gehalten an diesen Elementen kleiner oder gleich 0,2% ist,
- gegebenenfalls Kalzium mit einem Gehalt kleiner oder gleich 0,1%,
- gegebenenfalls Kupfer mit einem Gehalt kleiner oder gleich 1%,

Rest Eisen und aus der Verarbeitung stammende Verunreinigungen, darunter Stickstoff, wobei die chemische Zusammensetzung ausserdem die folgenden Bedingungen erfüllt:

$$Cr + 3 \times (Mo + W/2) + 10 \times (V + Nb/2 + Ta/4) \geq 2,1$$

$$Mo + W/2 > 0,7\% \text{ wenn } Cr \leq 1,5\%$$

$$Tr = 3,8xC + 1,1xMn + 0,7xNi + 0,6xCr + 1,6x(Mo + W/2) +0,6 \geq 3$$

$$R = 3,8xC + 10xSi +3,3xMn + 2,4xNi + 1,4x(Cr + Mo + W/2) \leq 11,$$

wobei Tr und R die Härtbarkeit bzw. den thermischen Widerstand darstellen.

**2.** Stahl nach Anspruch 1, **dadurch gekennzeichnet, dass** gilt:

$$0,2\% \le C \le 0,24\%$$

**3.** Stahl nach Anspruch 1 oder, **dadurch gekennzeichnet, dass** gilt:

$$1,5\% \le Cr \le 2,5\%$$

**4.** Stahl nach Anspruch 3, **dadurch gekennzeichnet, dass** gilt:

$$0,5\% \le Mo + W/2 \le 1,2\%$$

**5.** Stahl nach einem der Ansprüche 1 bis 4, **dadurch gekennzeichnet, dass** die chemische Zusammensetzung die Bedingung erfüllt:

$$BH = 326 + 847,3xC + 18,3xSi - 8,6xMn -12,5xCr > 460$$

**6.** Stahl nach einem der Ansprüche 1 bis 5, **dadurch gekennzeichnet, dass** seine chemische Zusammensetzung die Bedingung erfüllt

$$Cr + 3x( Mo + W/2 ) + 10x( V + Nb/2 + Ta/4 ) \ge 3,6$$

**7.** Stahl nach einem der Ansprüche 1 bis 6, **dadurch gekennzeichnet, dass** gilt:

$$Si \le 0,2\%$$

**8.** Stahl nach einem der Ansprüche 1 bis 7, **dadurch gekennzeichnet, dass** gilt:

$$Si \le 0,1\%$$

**9.** Stahl nach einem der vorhergehenden Ansprüche, **dadurch gekennzeichnet, dass** die Gehalte an Titan, Zirkon und Stickstoff, der als Verunreinigung enthalten ist, die Bedingung erfüllen:

$$0,00003 \le (N) x (Ti + Zr/2) \le 0,0016$$

und dass im erstarrten Zustand die Anzahl der Ausfällungen der Nitrate des Titans oder des Zirkons mit einer Grösse von mehr als 0,1 $\mu$m , gezählt auf einer Fläche von 1 mm$^2$ eines mikroskopischen Schnittes des erstarrten Stahles kleiner ist als 4 mal die Summe aus dem Gesamtgehalt an als Nitrat ausgefälltem Titan und aus der Hälfte des Gesamtgehaltes an als Nitrat ausgefälltem Zirkon, ausgedrückt in Tausendstel Gewichtsprozent.

**10.** Stahl nach Anspruch 1, **dadurch gekennzeichnet, dass** seine chemische Zusammensetzung, in Gewichtsprozent, enthält:

$$0,2\% \le C \le 0,24\%$$

$$0\% \le Si \le 0,1\%$$

$$0\% \leq Mn \leq 2\%$$

$$0\% \leq Ni \leq 0,5\%$$

$$1,5\% \leq Cr \leq 2,5\%$$

$$0\% \leq Mo + W/2 \leq 1,2\%$$

$$0\% \leq V + Nb/2 + Ta/4 \leq 0,5\%$$

$$0,002\% \leq B \leq 0,015\%$$

$$0,005\% \leq Al \leq 0,2\%$$

- gegebenenfalls wenigstens ein Element, das ausgewählt ist aus Titan und Zirkon, mit derartigen Gehalten, dass die Summe aus dem Gehalt an Titan und aus der Hälfte des Gehaltes an Zirkon kleiner oder gleich 0,3% ist,
- gegebenenfalls wenigstens ein Element, das ausgewählt ist aus Schwefel, Selen und Tellur, wobei die Summe aus den Gehalten dieser Elemente kleiner oder gleich 0,2% ist,
- gegebenenfalls wenigstens ein Element, das ausgewählt ist aus Blei und Wismut, wobei die Summe aus den Gehalten dieser Elemente kleiner oder gleich 0,2% ist,
- gegebenenfalls Kalzium mit einem Gehalt kleiner oder gleich 0,1%,

Rest Eisen und aus der Verarbeitung stammende Verunreinigungen, wobei die chemische Zusammensetzung ausserdem die folgenden Bedingungen erfüllt:

$$Cr + 3 \times (Mo + W/2) + 10 \times (V + Nb/2 + Ta/4) \geq 3,6$$

$$Tr \geq 3$$

$$R \leq 1,5 + 1,83\, Tr$$

11. Stahl nach Anspruch 10, **dadurch gekennzeichnet, dass** die Gehalte an Titan, Zirkon und Stickstoff derart gewählt sind, dass gilt:

$$0,00003 \leq (N) \times (Ti + Zr/2) \leq 0,0016$$

und dass, im erstarrten Zustand des Stahles, die Anzahl der Ausfällungen der Nitrate des Titans oder des Zirkons mit einer Grösse von mehr als 0,1 μm, die auf einer Fläche von 1 mm$^2$ eines mikroskopischen Schnittes des erstarrten Stahles gezählt werden, kleiner ist als 4 mal die Summe aus dem Gesamtgehalt des in Form von Nitraten ausgefällten Titans und aus der Hälfte des Gesamtgehaltes des in Form von Nitraten ausgefällten Zirkons, ausgedrückt in Tausendstel Gewichtsprozent.

12. Verwendung eines Stahles nach einem der Ansprüche 1 bis 11 zur Herstellung einer Gussform für den Spritzguss von Kunststoffen.

13. Verwendung eines Stahles nach einem der Ansprüche 1 bis 11 zur Herstellung im Giessverfahren einer Gussform

**14**

für Kunststoffe.

**14.** Draht zum Schweissen oder zur Herstellung von Schweisselektroden, **dadurch gekennzeichnet, dass** er aus einem Stahl nach einem der Ansprüche 1 bis 8 und 10 besteht.

**Claims**

**1.** Steel for the manufacture of moulds, and especially of moulds for the injection moulding of plastics, **characterized in that** its chemical composition comprises, by weight:

$$0.17\% \leq C \leq 0.27\%$$

$$0\% \leq Si \leq 0.5\%$$

$$0\% \leq Mn \leq 2\%$$

$$0\% \leq Ni \leq 2\%$$

$$0\% \leq Cr \leq 3\%$$

$$0\% \leq Mo + \tfrac{1}{2}W \leq 1.5\%$$

$$0\% \leq V + \tfrac{1}{2}Nb + \tfrac{1}{4}Ta \leq 0.5\%$$

$$0.002\% \leq B \leq 0.015\%$$

$$0.005\% \leq Al \leq 0.2\%$$

- optionally, at least one element taken from sulphur, selenium and tellurium, the sum of the contents of these elements being less than or equal to 0.2%;
- optionally, at least one element taken from titanium and zirconium, in contents such that the sum of the titanium content and of half of the zirconium content is less than or equal to 0.3%;
- optionally, at least one element taken from lead and bismuth, the sum of the contents of these elements being less than or equal to 0.2%;
- optionally, calcium with a content of less than or equal to 0.1%;
- optionally, copper with a content of less than or equal to 1.0%;

the balance being iron and impurities resulting from the smelting, among which is nitrogen, the chemical composition further satisfying the following relationships:

$$Cr + 3(Mo + \tfrac{1}{2}W) + 10(V + \tfrac{1}{2}Nb + \tfrac{1}{4}Ta) \geq 2.1$$

$$Mo + \tfrac{1}{2}W > 0.7\% \text{ if } Cr \leq 1.5\%$$

$$Tr = 3.8C + 1.1Mn + 0.7Ni + 0.6Cr + 1.6(Mo + \tfrac{1}{2}W) + 0.6 \geq 3$$

$$R = 3.8C + 10Si + 3.3Mn + 2.4Ni + 1.4(Cr + Mo + \tfrac{1}{2}W) \leq 11$$

Tr and R representing the hardenability and the thermal resistivity, respectively.

2. Steel according to Claim 1, **characterized in that**:

$$0.2\% \leq C \leq 0.24\%.$$

3. Steel according to Claim 1 or Claim 2, **characterized in that**:

$$1.5\% \leq Cr \leq 2.5\%.$$

4. Steel according to Claim 3, **characterized in that**:

$$0.5\% \leq Mo + \tfrac{1}{2}W \leq 1.2\%.$$

5. Steel according to any one of Claims 1 to 4, **characterized in that** its chemical composition satisfies the relationship:

$$BH = 326 + 847.3C + 18.3Si - 8.6Mn - 12.5Cr > 460.$$

6. Steel according to any one of Claims 1 to 5, **characterized in that** its chemical composition satisfies the relationship:

$$Cr + 3(Mo + \tfrac{1}{2}W) + 10(V + \tfrac{1}{2}Nb + \tfrac{1}{4}Ta) \geq 3.6.$$

7. Steel according to any one of Claims 1 to 6, **characterized in that**:

$$Si \leq 0.2\%.$$

8. Steel according to any one of Claims 1 to 7, **characterized in that**:

$$Si \leq 0.1\%.$$

9. Steel according to any one of the preceding claims, **characterized in that** its contents of titanium, zirconium and nitrogen, which is present by way of impurity, are such that:

$$0.00003 \leq (N) \times (Ti + \tfrac{1}{2}Zr) \leq 0.0016$$

and **in that**, in the solid state, the number of titanium nitride or zirconium nitride precipitates having a size greater than 0.1 $\mu$m, counted over an area of 1 mm$^2$ of a micrographic section of steel in the solid state, is less than four times the sum of the total content of titanium precipitated in nitride form and of half the total content of zirconium precipitated in nitride form, expressed in thousandths of a % by weight.

10. Steel according to Claim 1, **characterized in that** its chemical composition comprises, by weight:

$$0.2\% \leq C \leq 0.24\%$$

$$0\% \leq Si \leq 0.1\%$$

$$0\% \leq Mn \leq 2\%$$

$$0\% \leq Ni \leq 0.5\%$$

$$1.5\% \leq Cr \leq 2.5\%$$

$$0.5\% \leq Mo + \tfrac{1}{2}W \leq 1.2\%$$

$$0\% \leq V + \tfrac{1}{2}Nb + \tfrac{1}{4}Ta \leq 0.15\%$$

$$0.002\% \leq B \leq 0.015\%$$

$$0.005\% \leq Al \leq 0.2\%$$

- optionally, at least one element taken from titanium and zirconium, in amounts such that the sum of the titanium content and of half of the zirconium content is less than or equal to 0.3%;
- optionally, at least one element taken from sulphur, selenium and tellurium, the sum of the contents of these elements being less than or equal to 0.2%;
- optionally, at least one element taken from lead and bismuth, the sum of the contents of these elements being less than or equal to 0.2%;
- optionally, calcium with a content of less than or equal to 0.1%;

the balance being iron and impurities resulting from the smelting, the chemical composition furthermore satisfying the following relationships:

$$Cr + 3(Mo + \tfrac{1}{2}W) + 10(V + \tfrac{1}{2}Nb + \tfrac{1}{4}Ta) \geq 3.6$$

$$Tr \geq 3$$

$$R \leq 1.5 + 1.83Tr.$$

**11.** Steel according to Claim 10, **characterized in that** its titanium, zirconium and nitrogen contents are such that:

$$0.00003 \leq (N) \times (Ti + \tfrac{1}{2}Zr) \leq 0.0016$$

and **in that**, in the solid state, the number of titanium nitride or zirconium nitride precipitates, having a size greater than 0.1 $\mu m$, counted over an area of 1 $mm^2$ of a micrographic section of steel in the solid state, is less than four times the sum of the total content of titanium precipitated in nitride form and of half of the total content of zirconium precipitated in nitride form, expressed in thousandths of a % by weight.

**12.** Use of a steel according to any one of Claims 1 to 11 for the manufacture of a mould for injection moulding plastics.

**13.** Use of a steel according to any one of Claims 1 to 11 for the manufacture by casting of a mould for plastics.

**14.** Welding wire or wire for the manufacture of welding electrodes, **characterized in that** it consists of a steel according to any one of Claims 1 to 8 and 10.